# EUROPEAN PATENT APPLICATION

(11) **EP 2 634 706 A2**
(43) Date of publication of application: **04.09.2013**
(21) Application number: 12006330.0
(22) Date of filing: 07.09.2012
(51) Int. Cl.: G06F 17/30

(54) **System and method for multimedia stream data searching and retrieval**

(30) Priority: 29.02.2012 US 201213408401
(71) Applicant: Broadcom Corporation, Irvine, CA 92617 (US)
(72) Inventor: Gauthier, Bruno, Methuen, MA 01844 (US)
(74) Representative: Jehle, Volker Armin

(57) **Abstract**

A system can search for data streams. A processor searches for a data stream device or provider on a network. It is determined if the data stream device or provider includes a stored stream index. The stream index is accessed as a reference stream index if the stream index is discovered. Data streams are searched for using the reference stream index.

## Description

### 1. Technical Field.

This disclosure relates to data searching and retrieving systems and methods, and more particularly to indexing, searching and/or retrieving stream data such as multimedia steam data for media players or other consumer electronic devices.

### 2. Background.

It can be a complex or time consuming task to browse data streams, e.g., movie, music, and pictures. The data streams may be stored in disparate locations such as on file servers or a universal serial bus (USB) device for consumer electronic devices like smart phones, smart televisions (TV), optical discs such as Blu-Ray, Internet protocol (IP) enabled set top boxes, and computers. Some consumer electronic devices do not include built in search capability. If the search capability is available, some searches can be applied to one media at a time. Searches for streamed data by an end-user can be an organic process. The end-users may remember part of the stream title, the name of an artist, or a partial location of the stream. For the end-user, this can result in a slow searching of the stream data, such as media by media or directory by directory, to find a desired stream. Moreover, consumer electronics devices may not have the processing power of computer server farms used normally to browse and crawl for computer content.

### BRIEF SUMMARY OF THE INVENTION

According to an aspect, a method for searching for data streams is provided, comprising:
searching with a processor for a data stream device or provider on a network;
determining if the data stream device or provider includes a stored stream index;
accessing the stream index as a reference stream index if the stream index is discovered; and
searching for data streams using the reference stream index.

Advantageously, the method further comprises crawling the network for available data streams and creating references to discovered data streams to store in the reference stream index.

Advantageously, crawling the network further comprises checking the stream device or provider for a universal unique identifier and scanning streams on the stream device or provider to create the references if the universal unique identifier is available.

Advantageously, the method further comprises determining if memory and computer processing bandwidth are available and fetching the scanned streams if the memory and computer processing bandwidth are available.

Advantageously, the method further comprises creating in the reference stream index references to the streams based on the scanned streams.

Advantageously, the method further comprises waiting for available memory and computer processing bandwidth before creating references in the reference stream index.

Advantageously, the method further comprises waiting for crawling until an event occurs.

Advantageously, the event comprises un-mounting or mounting a universal serial bus, or adding or removing a digital living network alliance server.

Advantageously, the method further comprises marking the data stream in the reference steam index as unavailable if the universal serial bus is un-mounted or the digital living network alliance server is removed.

Advantageously, the event comprises a television guide update.

Advantageously, the method further comprises sharing the reference stream index with other devices on the network.

According to an aspect, a method for retrieving a data stream comprises:
listening with an inquiring device for an available local device on a network;
querying the local device for a reference stream index;
if the local device includes the reference stream index, viewing a list of stream providers from the reference stream index; and
retrieving the data stream based on information from the reference stream index.

Advantageously, the network comprises a mesh network.

Advantageously, the data stream is retrieved from a universal serial bus of a remote machine.

Advantageously, the method further comprises updating the reference stream index with reference information stored on the inquiring device.

Advantageously, the method further comprises maintaining reference to frequently used data streams in the reference stream index and deleting reference to infrequently used data streams in the reference stream index.

According to an aspect, a system for providing a data stream comprises:
a memory configured to store a reference stream index, the reference stream index configured to contain references to data streams available on a wide area network, the references including identification information about the data streams and pointers to the data streams;
a processor connected with the memory, the processor configured to advertise the reference stream index on a local area network; and
the processor configured to provide the reference stream index to a device in communication with the processor on the local area network such that the device is aware of the data streams available on the wide area network without searching the wide area network.

Advantageously, the local area network comprises a mesh network.

Advantageously, the processor is configured to advertise the reference stream index using at least one of a multicast domain name system (mDNS), Bonjour and very simple protocol (VSP).

Advantageously, the device further shares a device reference stream index with the processor over the local area network.

### BRIEF DESCRIPTION OF THE DRAWINGS

The system may be better understood with reference to the following drawings and description. In the figures, like reference numerals can designate corresponding parts throughout the different views.

Figure 1 is a block diagram of an exemplary stream sharing environment.

Figure 2 is a block diagram of an exemplary device for storing and browsing lists of references of streams, and/or storing and playing streams.

Figure 3 is a flow chart of an exemplary logic of a stream retrieval system for a device.

Figure 4 is a flow chart of an exemplary stream crawler process.

Figure 5 is a flow chart of an exemplary process for scanning the streams located on a stream provider and avoiding an overflow of memory in the consumer electronic device.

Figure 6 is a flow chart of an exemplary process for detecting new stream providers in the proximity of the consumer electronic device.

Figure 7 is a flowchart of an exemplary stream retrieval system mesh listener.

Figure 8 is a flowchart for an exemplary process of researching streams once the stream retrieval system is started on the consumer electronic device.

### DETAILED DESCRIPTION

The discussion below relates a systems, apparatus and methods (e.g., systems) to quickly search, browse and retrieve data from devices even if the resources, memory and processing power of the devices are limited. The data can include multimedia stream content and devices can include consumer electronic media players. The systems can use background processes to find references in hash tables of the available multimedia streams in the proximity of the consumer electronic device. Available multimedia data streams can include USB attached devices, Server Message Block/Common Internet File System (SMB/CIFS) attached devices, network file system (NFS) attached devices, digital living network alliance (DLNA) servers, electronic TV guides, stream providers such as Netflix and CinemaNow, etc. To prevent long search times of available streams, such as due to limited processing power and memory footprints of consumer electronic devices, and the possible high volume of available multimedia streams, the system can index and keep track of available streams.

Various computing techniques can be used with the system such as least recently used (LRU) logic, tree depth limiters, automatic expired record removal, mesh networking with other stream retrieval systems, etc. The system can balance search efficiency and time to locate the steams with available resources of the consumer electronic device. The stream retrieval system can allow end-users of consumer electronic devices to search information, filter and share locally and/or over social network his/her multimedia streams. The system can provide media players with near instantaneous and complex stream research capabilities and with fast browsing capabilities, even if the resources, memory and processing power of the consumer electronic devices are limited.

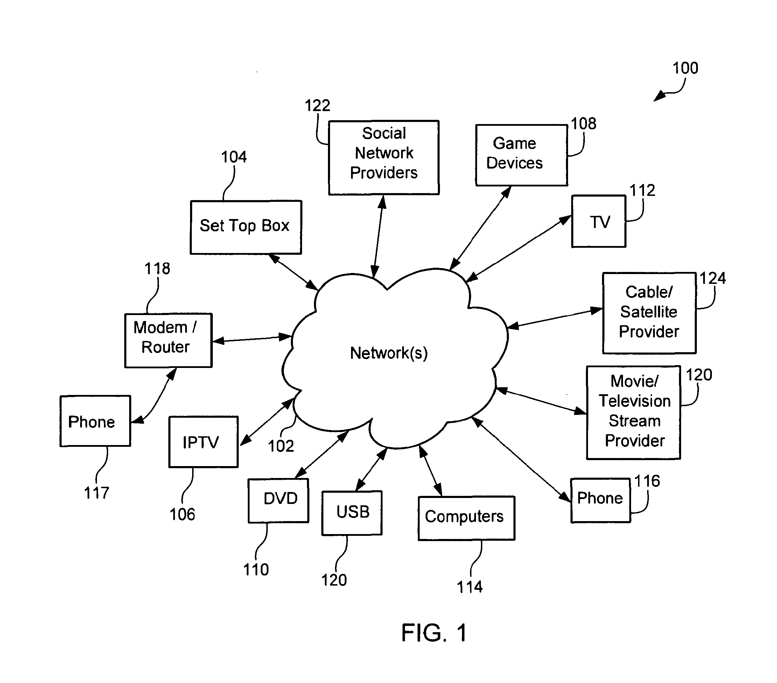

Figure 1 is a block diagram of an exemplary data stream sharing environment 100. The environment 100 can include various devices and entities connected over wired and/or wireless networks 102. The networks 102 can include telecommunications networks, the Internet, WiFi, Bluetooth, wide area networks (WAN), local area networks (LAN), co-axial cable, satellite, cellular, etc., and any combination of them. The various devices connected over the network can include cable or satellite set-top boxes 104, internet protocol televisions (IPTV) 106, gaming device 108 such as Sony Playstation or Microsoft Xbox, a Blu-ray player, a digital-video-digital (DVD) player 110, televisions 112, taptop, desktop and notebook computers 114, phones, personal digital assistants (PDA) and Blackberrys 116 and 117, modems and routers 118 and USB devices. Entities connected to the networks 102 include streaming network providers 120 such as Hulu, YouTube or Netflix, social network providers 122, such as Facebook and Flicker, and cable and satellite providers 124, such as Comcast or DirecTv. Streaming content can be provided by network operators or by other entities such as those that provide as over-the-top (OTT) services, e.g., services provided over the network operators services.

Any and all of the devices and entities in the environment 100 can store, browse and/or play stream content, such as pictures, movies and songs. At least one device, such as the modem/router 118, includes a list of references, such as in a hash table, to devices and entities on the networks 102 and to streams contained on the devices and entities. Only the references are stored in the list, not the streams themselves, so the references can be about only 1 kb each in size. The reference can include pointers to the actual streams such that the streams can be played once selected by a user or processor. The modem/router can advertise its list of references to other devices on the networks 102 or within local area networking range. For example, the phone 117 may come within networking range of the modem/router 118 to become aware of the advertised list of references. The availability of a list of references can be broadcast on a local network, such as with multicast Domain Name System (mDNS) service records, Bonjour by Apple and/or very simple protocol (VSP).

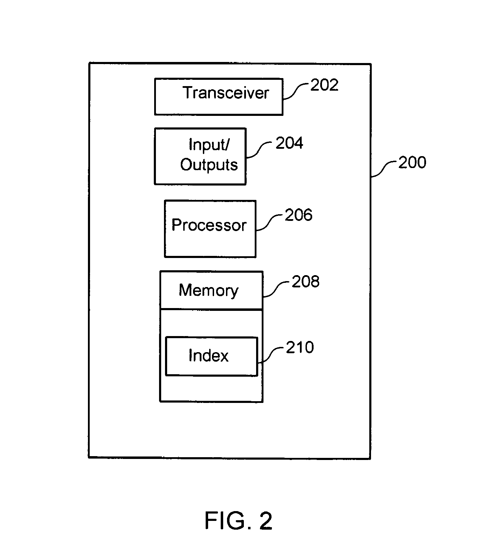

Figure 2 is a block diagram of an exemplary device 200 for storing and browsing lists of references of streams, and/or storing and playing streams. The device 200 can include one or more of a transceiver 202, inputs/outputs 204, processor 206 and memory 208. The memory 208 can store an index 210 or list of references to streams, devices and entities. The reference includes information about streams available on the networks 102. The reference can include identification information such as title, URL, reference type, e.g., television guide, movie, photo or music, reference sub-type, e.g., action, sport, jazz or rock, and metadata including genre, aspect ratios for video, resolution, etc. Since the references stored in the index 210 are only about 1 kb in size and merely point to the streams, a user can quickly search or browse the references to determine which song, video, picture, movie, etc. they want to view or listen to. Then a user can make a selection and the selection can be obtained from the device it is stored on and played. The selected song, video, movie, etc. can be shared with the device using a protocol such as DNLA has no search engine. The entire stream can be stored permanently or temporarily by the device playing it, either while it is being played or before it is played.

Once the index 210 of references is created, the index 210 can be shared with and stored on other devices. The indexes can be shared to create a type of mesh network where devices can capture and disseminate their own data, and also serve as a relay for other nodes to propagate the data in the network 102. For example, if phone 117 comes into contact with modem/router 118, the phone 117 can query the modem/router 118 for its list of available streams. The modem/router 118 can reply with a list of devices that it is connected to and list of available streams. The list can also include references to known devices that are currently disconnected. Such devices may not be available at the time but may become available in the future. If the phone 117 has memory space, the list of references can be stored on the phone 117, such as in cache. Then the phone 117 can be a source of a list of references like the modem/router 118.

In one example, a daughter takes a picture and uploads the pictures to Flickr. The daughter sends an email to her dad with the Flickr reference to the picture. Her dad can click on the Flickr reference contained in the email and create a Flickr account or log onto Flickr to view the picture.

In another example, using stream sharing described herein, when the daughter takes a picture it can become almost instantaneously available to her dad's playback device. The daughter's phone, camera or other device that the picture was taken with can act as a stream provider (e.g., block 400) on a network (block 702). Therefore, the daughter's device can share the picture with the dad's playback device on the network, e.g., both devices can reference the picture via the network.

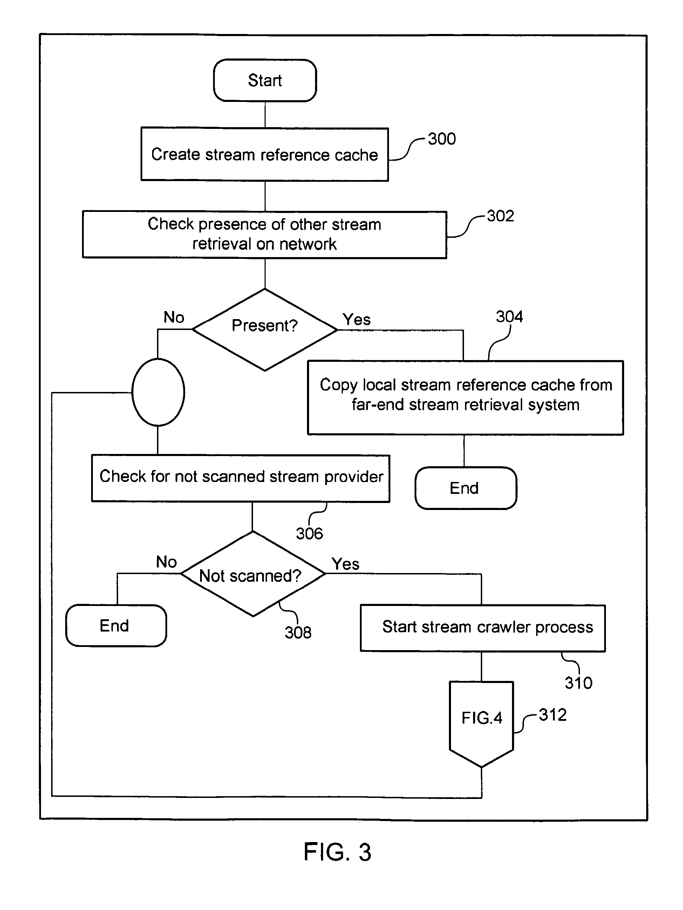

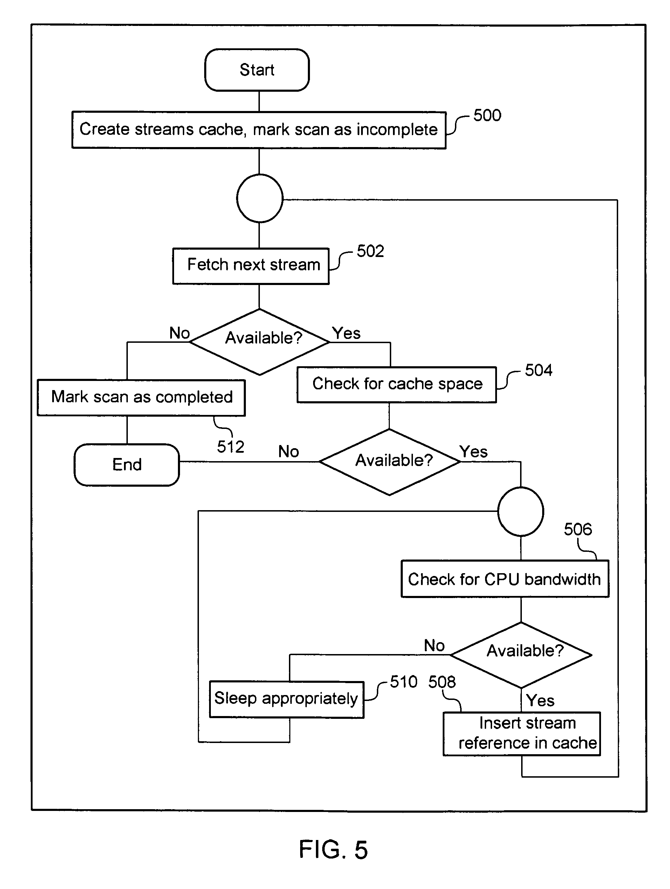

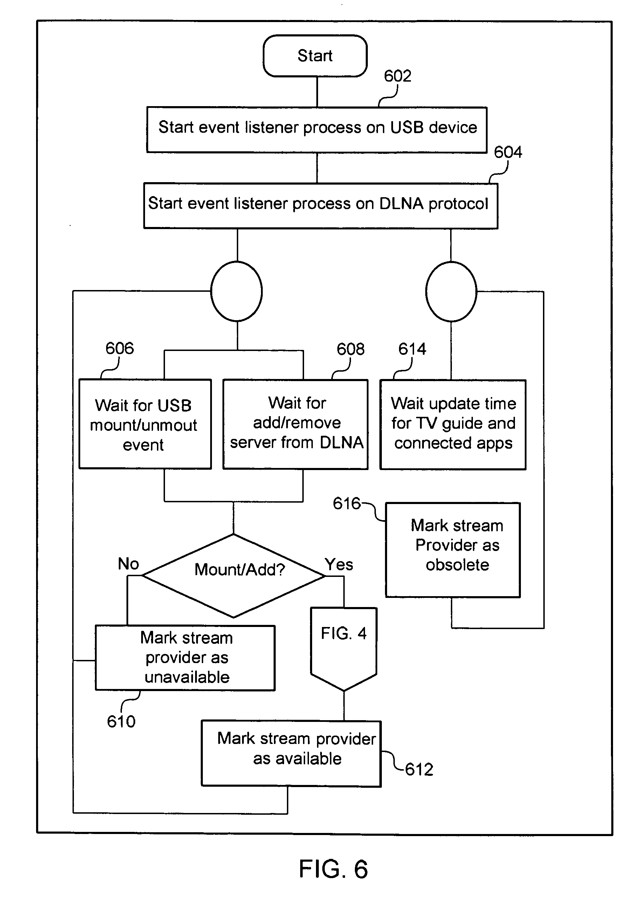

Figure 3 is a flow chart of an exemplary logic of a stream retrieval system for a device. The stream retrieval system can create a stream reference cache or retrieve the stream reference cache from any other consumer electronic device by using the stream retrieval system in the proximity of the consumer electronic device. At block 300, the stream retrieval system can start by creating a stream cache on a local device, such as the consumer electronic device. At block 302, the stream retrieval system checks attendance of any other stream retrieval system by advertising its presence on the network. If another stream retrieval system replies to the advertising message, the local device gathers a stream reference cache from a stream retrieval system peer (see Figure 5). Otherwise, the local device considers itself to be the only device to include a stream cache on the network and initiates a process to build a stream reference cache (see Figure 6).

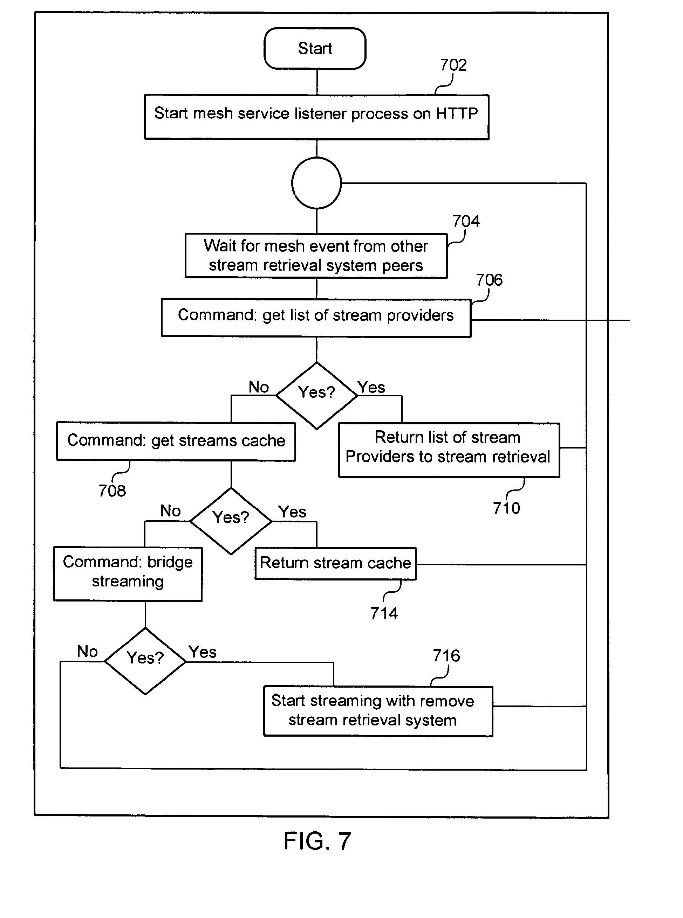

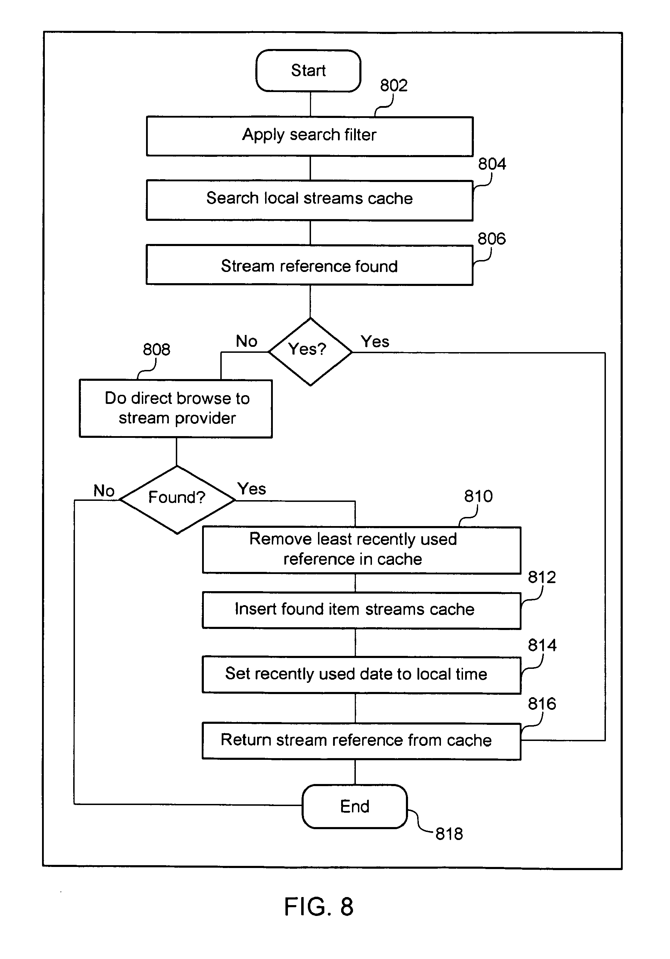

At block 304, the local device obtains a copy of the stream reference cache from the stream retrieval system peer and completes the starting process of the stream retrieval system. At block 306, the local device begins to scan all of the stream providers, e.g., DLNA servers, USB devices, TV guides, NetFlix, CinemaNow, etc. At block 308, the local device searches for an unscanned stream provider and, if one is found, the local device begins a stream crawler process (see Figure 7), to gather all available streams on the stream provider. If the local device does not discover any unscanned stream providers, the starting process of the stream retrieval is completed. At block 310, the stream crawler process is initiated (see Figure 8) to obtain all the streams available on the current stream provider. At block 312, once the process is started, the local device checks for the next unscanned stream provider (see block 306).

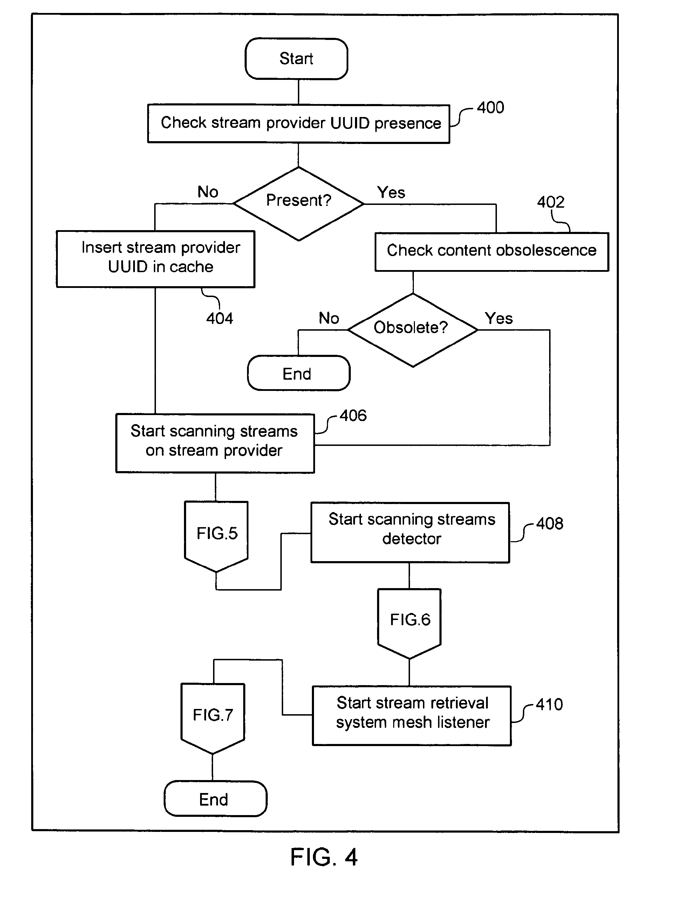

Figure 4 is a flow chart of an exemplary stream crawler process. When a new stream provider device is detected in the proximity of the consumer electronic device, a new instance of the stream crawler process can initiate, if needed, to scan the content of the new stream provider. At block 400, the local device checks the universal unique identifier (UUID) to validate if the stream provider is already present in the stream cache. If the UUID is already present, the local device checks for the obsolescence of the stream provider content. If the UUID of the stream provider is not present in the streams cache, the stream provider UUID is inserted in the streams cache.

At block 402, after the local device checks for the obsolescence of the content of the current stream provider, it can determine whether the stream provider is considered as out of date based on the timestamp of the last scan and the type of stream provider. USB keys are obsolete quicker than a DLNA server. If the content of the stream provider is declared as obsolete, the stream provider content is scanned. Otherwise, the streams located on the stream providers can be declared as accurate and the list of streams on the stream provider need not be rescanned.

At block 404, the stream provider (UUID) is inserted in the stream cache, including the timestamp of the insertion, and the scanning of the streams is started. At block 406, the current stream provider scan begins (see Figure 5). At block 408, the stream provider detector asynchronous process is started (see Figure 6) for this specific stream provider. The process determines when the stream provider became available, or not. For example, if a USB key is inserted into the local device, the streams of the stream provider, the USB key, become available, and if the USB key is removed the streams of the USB key become unavailable. At block 410, a stream retrieval system mesh listener asynchronous process is started (see Figure 6) for the specific stream provider. The process virtualizes the stream provider for all the stream provider peers, such as in Figure 1. The new stream provider peer can communicate with its virtual local device rather than talking directly to the stream provider.

Figure 5 is a flow chart of an exemplary process for scanning the streams located on a stream provider and avoiding an overflow of memory in the consumer electronic device. A fast response time can be maintained to the end-user of the consumer electronic device even if the consumer electronic device is scanning the content of one or more stream providers.

At block 500, the local device creates the stream cache and can mark the streams cache scan as incomplete. The local device then begins to iterate to all the streams available on the stream provider. At block 502, the local device fetches for the next stream from the stream provider. If a new stream is found, the local device checks for available space in the streams cache to insert the new reference.

At block 504, the local device checks for available memory space on the local device to grow to local cache of the new stream reference. The space available for the streams cache can be limited to avoid any performance degradation on the local device due to over allocation. The streams cache may be limited to use a maximum percentage of memory available on the local device. If memory space is found, the computer processing unit (CPU) usage bandwidth by the streams cache process is checked. Otherwise, the scan of the current stream provider is marked as complete and the stream scan process is complete. In this case, the stream is not part of the streams cache and can be available from a direct browse (see Figure 8).

At block 506, the streams cache process can limit its CPU usage to avoid overusing the process which leads into a performance degradation of the local device. If CPU usage is below certain thresholds, the CPU is considered as available for the stream scan process. Otherwise, the CPU is unavailable. At block 508, the new stream reference is inserted in the streams cache for this stream provider. Any other reference to this stream can be found in the streams cache (see Figure 8). The next available stream on the stream provider is then fetched at block 502. At block 510, there is no CPU bandwidth available for the stream scan process. The process is forced to sleep with a random value between certain thresholds to avoid cyclic problems with other processes running on the local device. Once the sleep is completed, at block 506 the stream scan process rechecks for any CPU bandwidth available on the local device for the streams cache reference insertion.

Figure 6 is a flow chart of an exemplary process for detecting new stream providers in the proximity of the consumer electronic device. At block 602, the local device starts to listen to the events on the local storage media such as the USB devices. The asynchronous process detects as accurately as possible when local storage becomes available. Events generated by the local storage can be processed. At block 604, the local device starts to listen to the events on the remote servers such as the DLNA servers. The asynchronous process detects as accurately as possible when the remote servers become available. Events generated by the remote servers can be processed. The TV guide events can also be processed.

At block 606, the local storage waits for a USB mount/unmount event to occur. If a new local storage is detected, the local device marks the stream provider as available at block 612. If local storage is removed, for example, pulling a USB key from the local device, the stream provider is marked as unavailable at block 610. At block 608, the local storage waits for events from the DLNA servers. If a DLNA server is added, the local device marks the stream provider as available at block 612. If a DLNA server is removed, the stream provider is marked as unavailable at block 610.

At block 610, the stream provider can mark as unavailable which generates an event to the retrieval systems peers that are connected to the mesh network (see Figure 8). When marked as unavailable, a timestamp is insert in the streams cache for this stream provider to recheck the obsolescence of the stream provider content (see block 402 of Figure 4). At this point, the content of the unavailable stream provider cannot be browsed or searched. At block 612, the stream provider is marked as available, which generate an event to the retrieval systems peers that are connected to the mesh network (see Figure 7). When marked as available, a timestamp can be inserted in the streams cache for this stream provider to recheck the obsolescence of the stream provider content (see block 402 of Figure 4). At this point the content of the available stream provider can be browsed or searched.

At block 614, the TV guide stream providers are updated synchronously. The local device waits for the update time, e.g., one day, and then marks the content of the stream provider content as obsolete. At block 616, the stream provider content is marked as obsolete. This leads to the stream crawler process to rescan the stream provider (see block 402 of Figure 4) and into an advertisement of the changes to all the system retrieval systems peers (see Figure 7).

Figure 7 is a flowchart of an exemplary stream retrieval system mesh listener such that consumer electronic devices within the same proximity can participate in helping each other construct a stream reference cache, resulting in the elimination of redundancy of information across the network of consumer devices in the same proximity. At block 702, the local device starts a mesh service listener to asynchronously await events from the stream retrieval system peers. At block 704, the local device awaits events from the stream retrieval system peers. The stream retrieval system peer events can be described in two categories: telemetry and command. Telemetries include events from a remote stream retrieval system to advise its peers of a modification of its streams cache, like the adding or the removal of a USB key (block 606 and 608). Common telemetries include add/remove stream provider, stream provider update completed, and connect/disconnect peer. Commands are sent by a remote stream retrieval system to ask for an action to be take care of by a stream retrieval system peer, such as querying for a copy of the streams cache (block 302). Other commands received by the local device include retrieving the list of stream providers connected to the local device, retrieving a copy of the streams caches from a remote stream retrieval system, and bridge streaming of a specific stream reference.

At block 706, when asked by a remote system retrieval system to retrieve the list of stream providers, the local device return the list of stream providers already detected by the local device (block 710). At block 708, when asked by a remote system retrieval system to retrieve a copy of the streams cache, the local device returns all the content of the cache which contains the reference to all the streams detected by the local device (block 714). At block 710, the local device returns the list of stream providers, e.g., even if the list is incomplete. Stream providers returned can include available/unavailable, with obsolete content, or not, and the stream provider can include local or remote streams provided by any other stream retrieval system available on the mesh network.

At block 712, depending where the stream is located, its content may or may not be accessible directly by a remote stream retrieval system. For example, if a stream is located on a USB device of a given local device, an inquiring device of a remote stream retrieval system may be unable to access the local storage device of a remote location. When queried by a remote system retrieval system to bridge streaming to a specific stream reference, the local device begins sending the content to the remove system retrieval system (block 716). At block 714, the local device returns its streams cache, e.g., even if the stream cache is incomplete. The stream includes several entries of stream references. Stream references can contain the stream name, its network address, the genre, the date, the number playback since, etc. At block 716, the local device begins streaming over hypertext transfer protocol (HTTP), or other networking protocol, the stream content requested the remote stream retrieval system, with or without encryption of the content.

Figure 8 is a flowchart for an exemplary process of searching for data streams once the stream retrieval system is started on the consumer electronic device. In the event insufficient memory is available, the system can hold the entire stream reference cache content. The stream retrieval system can promote the streams inside the limited cache against the streams that are searched less. Frequently used streams can remain in the cache, and infrequently used streams can be pushed outside of the cache.

At block 802, once the stream retrieval system is started (block 300) on a local device, requests for a stream can be handled by the local stream retrieval system. To obtain a stream from the stream reference system, the caller provides a regular expression, such as a concise and flexible means for matching, specifying and recognizing strings of text, such as particular characters, words, or patterns of characters. The request may be as simple as providing the stream title or, may be more sophisticated, for example, "get all movies the action movies rated 14 or lower." Once the requested regular expression is translated, the local streams cache is searched to obtain the appropriate matches of streams.

At block 804, the local streams cache is researched for the appropriate matches. The local stream is maintained in memory and hash tables can be used to increase the research speed. The matched stream references can be located in the stream cache, or not. At block 806, during the scanning of a stream provider, if the stream retrieval system runs out of space, (block 504), the stream reference can be located outside of the cache, or be found in the streams cache. At block 808, if the requested stream is not found in the stream cache, the research of the stream is then redirected to a direct content browsing by the end-user. If the end-user finds the appropriate stream, the stream is added to the stream cache. Otherwise, the research of the stream fails and ends (block 818).

At block 810, if no room is left for the stream cache to insert a new stream, the least recently used stream is removed from the stream cache. The stream found by the end-user (block 808) is then inserted in the stream cache. At block 812, the stream found is inserted in the streams cache and the recently used date of the new stream reference is set to an actual timestamp. At block 814, stream references of the stream cache contains a recently used date timestamp. This timestamp is used to manage the stream cache. Once the recently used date timestamp is updated, the stream reference is returned to the caller. At block 816, the stream reference is returned to the caller and the process of researching of streams ends at block 818.

The methods, devices, and logic described above may be implemented in other different ways in different combinations of hardware, software or both hardware and software. For example, the functionality described herein may be implemented using programmed hardware or firmware elements (e.g., application specific integrated circuits (ASICs), electrically erasable programmable read-only memories (EEPROMs), controllers, microprocessors, combinations of elements, etc.), or other related components. The functionality described herein may be achieved using a computing apparatus that has access to a code memory which stores computer-readable program code for operation of the computing apparatus, in which case the computer-readable program code can be stored on a medium which is fixed, tangible and directly readable, (e.g., removable diskette, compact disc read only memory (CD-ROM), random access memory (RAM), dynamic random access memory (DRAM), read only memory (ROM,) fixed disk, USB drive, or other machine-readable medium such as magnetic disk or optical disk), or the computer-readable program code can be stored remotely but transmittable via a modem or other interface device (e.g., a communications adapter) connected to a network (including, without limitation, the Internet) over a transmission medium, which may be either a non-wireless medium (e.g., optical or analog communications lines) or a wireless medium (e.g., microwave, infrared or other transmission schemes) or a combination thereof.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for searching for data streams, comprising:
searching with a processor for a data stream device or provider on a network;
determining if the data stream device or provider includes a stored stream index;
accessing the stream index as a reference stream index if the stream index is discovered; and
searching for data streams using the reference stream index.

2. The method of claim 1 further comprising crawling the network for available data streams and creating references to discovered data streams to store in the reference stream index.

3. The method of claim 2 wherein crawling the network further comprises checking the stream device or provider for a universal unique identifier and scanning streams on the stream device or provider to create the references if the universal unique identifier is available.

4. The method of claim 2 further comprising determining if memory and computer processing bandwidth are available and fetching the scanned streams if the memory and computer processing bandwidth are available.

5. The method of claim 4 further comprising creating in the reference stream index references to the streams based on the scanned streams.

6. The method of claim 5 further comprising waiting for available memory and computer processing bandwidth before creating references in the reference stream index.

7. The method of claim 2 further comprising waiting for crawling until an event occurs.

8. The method of claim 7 wherein the event comprises un-mounting or mounting a universal serial bus, or adding or removing a digital living network alliance server.

9. The method of claim 8 further comprising marking the data stream in the reference steam index as unavailable if the universal serial bus is un-mounted or the digital living network alliance server is removed.

10. The method of claim 7 wherein the event comprises a television guide update.

11. The method of claim 1 further comprising sharing the reference stream index with other devices on the network.

12. A method for retrieving a data stream, comprising:
listening with an inquiring device for an available local device on a network;
querying the local device for a reference stream index;
if the local device includes the reference stream index, viewing a list of stream providers from the reference stream index; and
retrieving the data stream based on information from the reference stream index.

13. The method of claim 12 wherein the network comprises a mesh network.

14. A system for providing a data stream, comprising:
a memory configured to store a reference stream index, the reference stream index configured to contain references to data streams available on a wide area network, the references including identification information about the data streams and pointers to the data streams;
a processor connected with the memory, the processor configured to advertise the reference stream index on a local area network; and
the processor configured to provide the reference stream index to a device in communication with the processor on the local area network such that the device is aware of the data streams available on the wide area network without searching the wide area network.

15. The system of claim 14 wherein the local area network comprises a mesh network, and/or wherein the processor is configured to advertise the reference stream index using at least one of a multicast domain name system (mDNS), Bonjour and very simple protocol (VSP).
